# EUROPÄISCHE PATENTSCHRIFT

(11) **EP 2 990 732 B1**
(45) Veröffentlichungstag und Bekanntmachung des Hinweises auf die Patenterteilung: **22.01.2020**
(21) Anmeldenummer: 15180467.1
(22) Anmeldetag: 11.08.2015
(51) Int. Cl.: F24C 15/32, H05B 6/64

(54) **GARGERÄT**
COOKING DEVICE
APPAREIL DE CUISSON

(30) Priorität: 28.08.2014 DE 102014112346
(43) Veröffentlichungstag der Anmeldung: 02.03.2016
(73) Patentinhaber: Miele & Cie. KG, 33332 Gütersloh (DE)
(72) Erfinder: Kaudewitz, Carolin, 33378 Rheda-Wiedenbrück (DE); Höhn, Rüdiger, 33120 Hiddenhausen (DE); Schnee, Alexander, 32257 Bünde (DE); Schulze, Christian, 32130 Enger (DE)

(56) Entgegenhaltungen:
- EP-A1- 1 610 063
- EP-A2- 1 862 099
- WO-A1-2013/003891
- DE-A1-102010 002 853
- DE-A1-102011 088 454
- DE-A1-102011 088 482
- JP-A- 2005 155 998
- JP-A- 2008 025 895

## Beschreibung

Die vorliegende Erfindung betrifft ein Gargerät mit wenigstens einer Gehäuseeinrichtung, wenigstens einem Garraum und wenigstens einer Dampferzeugereinrichtung. Dabei ist die Dampferzeugereinrichtung dazu geeignet und ausgebildet ist, den Garraum mit Dampf zu versorgen. Weiterhin ist der Dampferzeugereinrichtung wenigstens eine entnehmbare Behältereinrichtung zugeordnet, welche wenigstens einen Behälterabschnitt und wenigstens einen Halteabschnitt umfasst. Zwischen dem Behälterabschnitt und dem Halteabschnitt ist wenigstens abschnittsweise wenigstens ein Eingriff ausgebildet und an dem Halteabschnitt ist wenigstens ein Griff vorgesehen.

Gargeräte mit einem Dampferzeuger, insbesondere Dampfgarer, bieten einem Benutzer die Möglichkeit, Gargut besonders schonend mittels Dampf zuzubereiten. Um Dampf in dem Garraum zur Verfügung zu stellen, sind mehrere Methoden zur Dampferzeugung bekannt geworden.

Bei der internen Dampferzeugung wird Wasser in den Garraum eingeleitet und auf einer Verdampfungsfläche, meist auf dem Garraumboden, erhitzt und verdampft. Externe Dampferzeuger hingegen produzieren außerhalb des Garraumes Dampf und leiten kein Wasser, sondern nur Dampf in den Garraum ein.

Bei beiden Arten der Dampferzeugung muss dem Dampferzeuger bzw. der jeweiligen Vedampfungsfläche je nach Bedarf Wasser zugeführt werden. Dazu sind Gargeräte bekannt geworden, die einen entnehmbaren Wassertank für den Dampferzeuger umfassen. Ein entnehmbarer Wassertank ist beispielsweise aus der Druckschrift JP 2008 025 895 A bekannt. In einem solchen Wassertank kann Wasser zur Dampferzeugung bevorratet werden. Die EP 1 862 099 A2 zeigt, dass in dem Wassertank auch die Verdampfung des Wassers erfolgen kann. Wird das Wasser außerhalb des Wassertanks verdampft, dann muss es aus dem in dem Gargerät positionierten Wassertank entnommen werden. Hierzu sind unterschiedliche Entnahmeeinrichtungen bekannt. So zeigt die WO 2013/003891 A1 ein Gargerät, bei dem als Entnahmeeinrichtung ein Saugrohr in den Wassertank einschwenken kann und der Entnahme von Wasser aus dem Tank dient.

Eine andere Art einer Entnahmeeinrichtung zeigen die Dokumente DE 10 2010 002 853 A1, JP 2005 155 998 A, DE 10 2011 088 482 A1 und DE 10 2011 088 454 A1. Bei diesen ist fest mit dem Wassertank verbunden ein Wasserauslassventil vorgesehen. Das Wasserauslassventil wird zur Entnahme von Wasser aus dem Wassertank mit dem Gargerät gekoppelt.

Ein solcher Wassertank sollte idealer Weise soviel Wasser aufnehmen können, dass wenigstens ein vollständiger Garvorgang mit der gespeicherten Wassermenge durchgeführt werden kann. Ansonsten müsste der Benutzer während des Garvorgangs Wasser nachfüllen, was den Bedienkomfort und im schlimmsten Fall sogar die Effizienz und/oder das Garergebnis negativ beeinflussen kann.

Ein solcher Wassertank muss ein bestimmtes Aufnahmevolumen zur Verfügung stellen, soll jedoch möglichst platzsparend und unauffällig an dem Gargerät vorgesehen werden. Daher kann es vorkommen, dass der Wassertank derart dimensioniert ist, dass er von einem Benutzer nicht komfortabel und/oder sicher gehalten bzw. zu einer Wasserquelle transportiert werden kann.

Es ist daher die Aufgabe der vorliegenden Erfindung, ein Gargerät mit einer Dampferzeugereinrichtung und einer der Dampferzeugereinrichtung zugeordneten entnehmbaren Behältereinrichtung zur Verfügung zu stellen, welche eine sichere und komfortabele Handhabung ermöglicht.

Diese Aufgabe wird gelöst durch ein Gargerät mit den Merkmalen des Anspruchs 1. Bevorzugte Weiterbildungen der Erfindung sind Gegenstand der Unteransprüche. Weitere Vorteile und Merkmale der Erfindung ergeben sich aus den Ausführungsbeispielen.

Das erfindungsgemäße Gargerät umfasst wenigstens eine Gehäuseeinrichtung, wenigstens einen Garraum und wenigstens eine Dampferzeugereinrichtung umfassend wenigstens eine entnehmbare Behältereinrichtung. Die Dampferzeugereinrichtung ist dazu geeignet und ausgebildet, den Garraum mit Dampf zu versorgen. Die Dampferzeugereinrichtung umfasst wenigstens eine Entnahmeeinrichtung. Dabei ist der Dampferzeugereinrichtung die wenigstens eine entnehmbare Behältereinrichtung zugeordnet, welche wenigstens einen Behälterabschnitt und wenigstens einen Halteabschnitt aufweist. Zwischen dem Behälterabschnitt und dem Halteabschnitt ist wenigstens abschnittsweise wenigstens ein Eingriff ausgebildet, wobei der Halteabschnitt insbesondere im Bereich dieses Eingriffs einen Griff umfasst, wobei die Behältereinrichtung eine Abdeckeinrichtung umfasst und in eine entsprechende Aufnahmeeinrichtung neben dem Garraum einschiebbar ist. Der Behälterabschnitt und der Halteabschnitt weisen zusammen eine Längsausdehnung auf, die ein Vielfaches der Breite des Halteabschnitts ausmacht. Zudem weist der Halteabschnitt eine Höhe auf, die ein Vielfaches der Breite des Griffs beträgt. Dabei beträgt die Breite des Griffs zwischen 33 mm und 50 mm und die Tiefe des Griffs macht wenigstens abschnittsweise 60% bis 75% der Breite des Griffs aus.

Erfindungsgemäß ist vorgesehen, dass die Entnahmeeinrichtung wenigstens eine schwenkbare Rohreinrichtung umfasst, welche beim Einschieben der Behältereinrichtung in die Aufnahmeeinrichtung wenigstens abschnittsweise in den Behälterabschnitt eintaucht,
wobei der Rohreinrichtung wenigstens eine Federeinrichtung zugeordnet ist, mittels der die Rohreinrichtung beim Entnehmen der Behältereinrichtung aus der Aufnahmeeinrichtung automatisch wieder wegschwenkt ist,
wobei die Rohreinrichtung bei einer entnommenen Behältereinrichtung im Wesentlichen horizontal im oberen Bereich der Aufnahmeeinrichtung gelagert ist, wobei die Rohreinrichtung beim Einschieben der Behältereinrichtung in die Aufnahmeeinrichtung automatisch in die Behältereinrichtung eingetaucht und in eine ungefähr vertikale Position verlagert ist,
wobei die Rohreinrichtung durch die Abdeckeinrichtung der Behältereinrichtung oder durch eine Öffnung in der Abdeckeinrichtung der Behältereinrichtung hindurch geführt ist, wobei die Öffnung in der Abdeckeinrichtung länglich ausgebildet ist.

Dabei ist bei der Breite des Griffs insbesondere die maximale Breite bzw. Ausdehnung des Griffs gemeint, wobei der Griff verschiedenartig geformt ausgebildet sein kann.

Der Eingriff zwischen dem Behälterabschnitt und dem Halteabschnitt ist insbesondere als ein Durchgriff bzw. ein Zwischenraum zwischen dem Griff und dem Behälterabschnitt ausgebildet. So kann ein Benutzer mit der Hand zwischen dem Halteabschnitt und dem Behälterabschnitt hindurchgreifen und den Griff der Behältereinrichtung gut erfassen bzw. umfassen.

Unter einem Vielfachen der Breite ist insbesondere gemeint, dass die entsprechenden Ausdehnungen wenigstens dreimal, viermal, fünfmal oder noch größer als die Vergleichsausdehnung ausgebildet sind. Dadurch wird insbesondere eine Behältereinrichtung zur Verfügung gestellt, die besonders schmal, dafür aber hoch und tief ausgebildet ist, sodass der Behälterabschnitt ein geeignetes Aufnahmevolumen zur Verfügung stellt.

Dabei ist insbesondere bevorzugt, dass das Aufnahmevolumen für zu verdampfendes Wasser wenigstens 1 Liter beträgt. Besonders bevorzugt beträgt das Aufnahmevolumen aber 1,3 Liter oder sogar 1,5 Liter. Dadurch wird sichergestellt, dass wenigstens ein vollständiger Dampfgarvorgang durchgeführt werden kann, ohne dass Wasser während des Garvorgangs nachgefüllt werden muss. Allgemein ist bevorzugt, dass das Aufnahmevolumen der Behältereinrichtung an die Größe des Garraumes angepasst ist.

Das erfindungsgemäße Gargerät bietet viele Vorteile. Ein erheblicher Vorteil ist, dass durch die spezielle Ausgestaltung der Behältereinrichtung eine Anordnung der Behältereinrichtung neben dem Garraum ermöglicht wird. Diese Positionierung der Behältereinrichtung ist besonders vorteilhaft, da die Behältereinrichtung besonders platzsparend und durch die Garraumtür optisch ansprechend verdeckt angeordnet werden kann.

Durch die spezielle Ausgestaltung des Griffs der Behältereinrichtung wird es zudem möglich, dass ein Benutzer die Behältereinrichtung zuverlässig und komfortabel aus dem Gargerät entnehmen kann, diese mit Wasser befüllen kann und sie wieder zurück in das Gargerät einstellen kann. Dies wird dadurch erreicht, dass die spezielle Dimensionierung des Griffs eine besonders ergonomische Form zur Verfügung stellt, die ein sicheres und zugleich bequemes Halten der Behältereinrichtung ermöglicht. Dies ist insbesondere dadurch erforderlich, da die Behältereinrichtung sehr schmal, dafür aber sehr tief und hoch ausgestaltet ist, was ein besonders zuverlässiges Halten der Behältereinrichtung nötig macht.

Bevorzugt beträgt die Breite des Griffes zwischen 40 mm und 45 mm. Eine solche Dimensionierung hat sich als besonders geeignet erwiesen.

Besonders bevorzugt macht die Tiefe des Griffes ungefähr 65% bis 70% der Breite des Griffes aus. Auch eine solche Dimensionierung hat sich als besonders vorteilhaft herausgesellt. So ist beispielsweise bei einer Griffbreite von ca. 44 mm eine Grifftiefe zwischen 28,6 mm und 30,8 mm bevorzugt. Dadurch wird eine Griffdimension zur Verfügung gestellt, die von einem Benutzer bequem gegriffen werden kann, zugleich aber auch ein sehr stabiles und zuverlässiges Halten des Behälters gewährleistet.

In zweckmäßigen Weiterbildungen weist der Eingriff wenigstens abschnittsweise eine Tiefe von wenigstens 20 mm auf. Dabei ist insbesondere ein Zwischenraum zwischen Halteabschnitt und Behälterabschnitt von wenigstens 25 mm und besonders bevorzugt von 27 mm vorgesehen. Dadurch wird sichergestellt, dass auch ein Benutzer mit einer relativ großen Hand mühelos durch den Eingriff zwischen Halteabschnitt und Behälterabschnitt hindurchgreifen und den Griff ergreifen kann.

In vorteilhaften Ausgestaltungen weist der Griff wenigstens abschnittsweise einen im Wesentlichen rundlichen Querschnitt auf. Dabei ist insbesondere eine an sich rundliche Form oder auch eine eckige Form mit abgerundeten Kanten vorteilhaft.

Bevorzugt ist der Griff wenigstens an der Vorderseite wenigstens abschnittsweise im Wesentlichen gebogen ausgebildet. Dadurch wird eine Überwölbung an der Vorderseite des Griffs zur Verfügung gestellt, die ein besonders angenehmes Greifen des Griffs ermöglicht.

Besonders bevorzugt ist dann auch oder ausschließlich die Rückseite wenigstens abschnittsweise im Wesentlichen gebogen ausgestaltet. Dadurch wird an der Rückseite eine Überwölbung zur Verfügung gestellt, die zu einem besonders guten Greif- und Haltekomfort beiträgt.

In zweckmäßigen Weiterbildungen schließt sich die Vorderseite des Griffs über wenigstens einen Radius an die Rückseite an. Dabei kann der Querschnitt des Griffs insbesondere eine im Wesentlichen eckige Grundform aufweisen, wobei die Übergänge bzw. die Kanten des Griffs abgerundet ausgestaltet sind. Auch hier wird ein besonders guter Trage- und Haltekomfort ermöglicht, da beim Umschließen des Griffs mit einer Hand keine Kanten in die Hand des Benutzers einschneiden können. Dies ist insbesondere vorteilhaft, da durch die Behältereinrichtung ein relativ großes Aufnahmevolumen zur Verfügung gestellt wird, welches einen relativ schweren gefüllten Behälter zur Folge hat.

Vorzugsweise ist die Behältereinrichtung in eine entsprechende Aufnahmeeinrichtung neben dem Garraum einschiebbar. Dabei ist unter einer solchen Aufnahmeeinrichtung insbesondere eine Art Einschubfach für die Behältereinrichtung zu verstehen, die einen Wasservorratstank für die Dampferzeugereinrichtung zur Verfügung stellt. Dabei ist unter einer entsprechenden Aufnahmeeinrichtung insbesondere eine passgenaue Aufnahme gemeint.

Bevorzugt schließt die Behältereinrichtung im installierten Zustand im Wesentlichen bündig mit wenigstens einer Frontfläche der Gehäuseeinrichtung ab. Unter bündig ist hier insbesondere flächenbündig zu verstehen, sodass beim eingeschobenen Zustand der Behältereinrichtung eine im Wesentlichen gleichmäßig und bevorzugt bündige Frontfläche an der Gehäuseeinrichtung gebildet wird. Der installierte Zustand ist dabei als Betriebszustand zu verstehen, in welchem die Behältereinrichtung im Wesentlichen vollständig in das Gargerät eingeschoben ist, sodass eine entsprechende Einrichtung zur Entnahme von Wasser aus dem Tank in diese Behältereinrichtung eingetaucht ist.

In besonders bevorzugten Ausgestaltungen ist der Aufnahmeeinrichtung wenigstens ein push-to-open-Mechanismus zugordnet. Ein solcher push-to-open-Mechanismus kann entweder direkt an oder in der Aufnahmeeinrichtung vorgesehen sein oder aber auch an der Behältereinrichtung angeordnet sein. Beim Einschieben der Behältereinrichtung in die Aufnahmeeinrichtung wird wenigstens eine Federeinrichtung des push-to-open-Mechanismus vorbelastet, wobei diese gespeicherte Federkraft im eingeschobenen Zustand der Behältereinrichtung gespeichert wird. Soll die Behältereinrichtung wieder aus dem Gargerät entnommen werden, wird der push-to-open-Mechanismus erneut ausgelöst, wodurch die gespeicherte Federkraft freigegeben wird. Dadurch wird die Behältereinrichtung wenigstens soweit aus dem Gargerät bzw. aus der Aufnahmeeinrichtung herausgeschoben, dass ein Benutzer sie einfach ergreifen kann.

Besonders bevorzugt ist im Garraum wenigstens eine Mikrowelleneinrichtung mit wenigstens einem Hochfrequenzerzeuger zugeordnet. Der Hochfrequenzerzeuger ist dazu geeignet und ausgebildet, Hochfrequenzstrahlung an wenigstens einer Eintrittsstelle in den Garraum einzuleiten. Bei einer solchen Ausgestaltung wird ein Kombigargerät zur Verfügung gestellt, mit welchem Speisen in einem Dampfbetrieb, einem Mikrowellenbetrieb oder auch in einem Kombinationsbetrieb zubereitet werden können.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine rein schematische Darstellung eines erfindungsgemäßen Gargerätes in einer Frontansicht;
- Figur 2: das Gargerät gemäß Figur 1 ohne Garraumtür;
- Figur 3: eine rein schematische Darstellung einer Behältereinrichtung in einer perspektivischen Ansicht;
- Figur 4: eine rein schematische Schnittansicht durch eine Behältereinrichtung;
- Figur 5: eine rein schematische Darstellung einer Behältereinrichtung in einer Seitenansicht;
- Figur 6: eine rein schematische Darstellung einer Behältereinrichtung in einer Draufsicht;
- Figur 7: eine reich schematische Darstellung einer Behältereinrichtung von der Seite in der nicht näher dargestellten Aufnahmeeinrichtung eines erfindungsgemäßen Gargerätes vor der Entnahme der Behältereinrichtung; und
- Figur 8: die Ansicht gemäß Figur 7 in der Betriebsstellung der Behältereinrichtung.

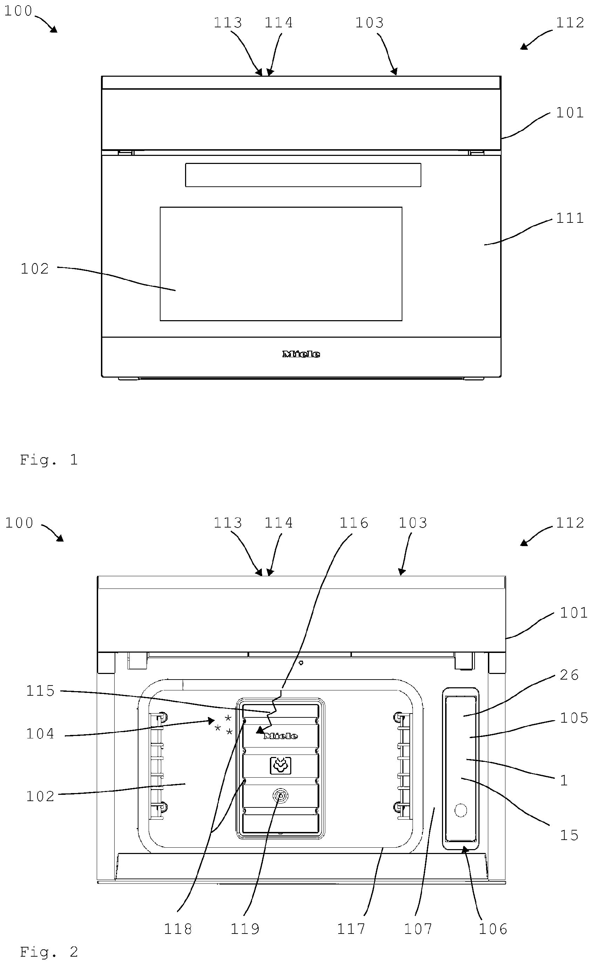

In Figur 1 ist ein erfindungsgemäßes Gargerät 100 rein schematisch in einer Frontalansicht dargestellt. Dabei umfass das Gargerät 100 eine Gehäuseeinrichtung 101, in der ein Garraum 102 ausgebildet ist. Der Garraum 102 ist dabei in Figur 1 von einer Garraumtür 111 verschlossen. Das Gargerät 100 umfasst weiterhin eine Dampferzeugereinrichtung 103, welche dazu geeignet und ausgebildet ist, den Garraum 102 mit Dampf 104 zu versorgen.

Das gezeigte Gargerät 100 ist hier als Kombigargerät 112 ausgebildet, wobei dem Garraum 102 neben der Dampferzeugereinrichtung 103 zusätzlich eine Mikrowelleneinrichtung 113 zugeordnet ist, die einen Hochfrequenzerzeuger 114 umfasst. Dabei ist der Hochfrequenzerzeuger 114 dazu geeignet und ausgebildet, Hochfrequenzstrahlung 115 an wenigstens einer Eintrittsstelle 116 in den Garraum 102 einzuleiten.

In Figur 2 ist das Gargerät 100 gemäß Figur 1 dargestellt, wobei in dieser Ansicht die Garraumtür 111 nicht dargestellt ist. Dabei blickt man durch die Beschickungsöffnung 117 in den Garraum 102. In dem Garraum 102 sind verschiedene Dampfeinlässe 118 vorgesehen, über welche der Dampf 104 in den Garraum 102 geleitet werden kann. Zudem umfasst der Garraum 102 einen Dampfauslass 119, über welchen überschüssiger Dampf 104 aus dem Garraum 102 abgeführt werden kann.

Erfindungsgemäß umfasst die Dampferzeugereinrichtung 103 des Gargerätes 100 eine Wasservorrateinrichtung 105, welche in dem hier gezeigten Ausführungsbeispiel als Behältereinrichtung 1 ausgestaltet ist. Die Behältereinrichtung 1 ist dabei in einer entsprechend ausgestalteten Aufnahmeeinrichtung 106 in der Gehäuseeinrichtung 101 des Gargerätes 100 neben dem Garraum 102 vorgesehen. Dabei ist die Aufnahmeeinrichtung 106 derart ausgestaltet und an die Behältereinrichtung 1 angepasst, dass die Behältereinrichtung 1 im Wesentlichen vollständig in der Aufnahmeeinrichtung 106 aufgenommen werden kann.

So bildet die Front 26 der Behältereinrichtung 1 zusammen mit der Frontfläche 107 der Gehäuseeinrichtung 101 eine im Wesentlichen bündige Fläche. Dabei sind die Behältereinrichtung 1 und die Frontfläche 107 im Wesentlichen flächenbündig vorgesehen. So wird insbesondere verhindert, dass ein Benutzer versucht, bei einer eingeschobenen Behältereinrichtung 1 zwischen Griff 25 und Aufnahmeeinrichtung 106 zu gelangen und diese herauszuziehen. Die Entnahme der Behältereinrichtung 1 soll nämlich über einen später näher beschriebenen push-to-open-Mechanismus erfolgen.

Die Anordnung der Behältereinrichtung 1 neben dem Garraum 102 ist durch die spezielle Ausgestaltung der Behältereinrichtung 1 möglich. Dabei kann die Behältereinrichtung 1 durch die spezielle Dimensionierung der Behältereinrichtung 1 neben dem Garraum 102 aufgenommen werden, ohne die Größe des Garraumes einschränken bzw. wesentlich einschränken zu müssen oder aber die Außendimensionen des Gargerätes zu vergrößern bzw. wesentlich zu vergrößern. Die spezielle Dimensionierung und Ausgestaltung der Behältereinrichtung 1 ist in den nachfolgenden Figuren näher erläutert.

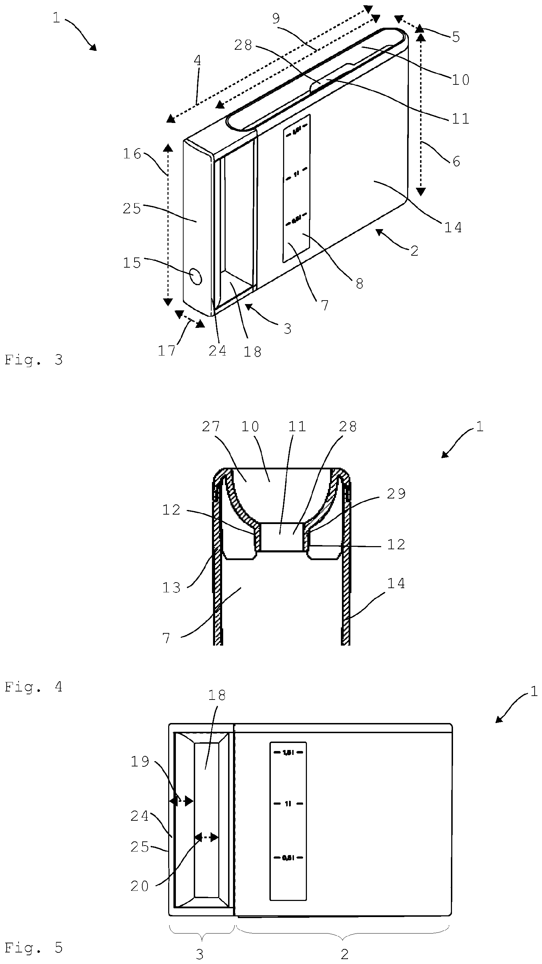

In Figur 3 ist die Behältereinrichtung 1 in einer rein schematischen perspektivischen Ansicht dargestellt. Dabei umfasst die Behältereinrichtung 1 einen Behälterabschnitt 2 und einen Halteabschnitt 3. Der Behälterabschnitt 2 stellt ein Aufnahmevolumen 7 für Wasser 8 zur Verfügung. Der Halteabschnitt 3 umfasst einen Griff 25, welcher es einem Benutzer ermöglicht, die Behältereinrichtung 1 trotz der speziellen Ausmaße sicher und komfortabel zu halten.

Der Behälterabschnitt 2 und der Halteabschnitt 3 weisen zusammen eine Längsausdehnung 4 auf, die ein Vielfaches der Breite 5 des Behälterabschnitts 2 ausmacht. Zudem ist die Höhe 6 des Behälterabschnitts 2 um ein Vielfaches größer, als die Breite 5 des Behälterabschnitts 2. Dabei entspricht die Höhe 6 des Behälterabschnitts 2 der Höhe 16 des Halteabschnitts 3.

Die Behältereinrichtung 1 bzw. der Behälterabschnitt 2 ist derart dimensioniert und ausgestaltet, dass der Behälterabschnitt 2 ein Aufnahmevolumen 7 für zu verdampfendes Wasser 8 zur Verfügung stellt, das mindestens 1 Liter beträgt. Dabei ist in dem hier gezeigten Ausführungsbeispiel das Aufnahmevolumen 7 für Wasser 8 derart groß gewählt, dass 1,5 Liter aufgenommen werden können.

Das Aufnahmevolumen 7 ist dabei an die Größe des Garraumes 102 angepasst und derart gewählt, dass mit einer Füllung der Behältereinrichtung 1 ein vollständiger Garvorgang im Dampfbetrieb vorgenommen werden kann. So muss ein Benutzer während eines Garvorgangs nicht die Garraumtür 111 öffnen, um Wasser 8 in die Behältereinrichtung 1 nachzufüllen. Dies würde den Bedienkomfort des Gargerätes 100 einschränken und zudem die Effektivität des Gargerätes 100 beeinträchtigen, da durch das Öffnen der Garraumtür 111 ein nicht unwesentlicher Anteil an Dampf 104 aus dem Garraum entweichen würde.

Allgemein kann durch die Behältereinrichtung 1 erreicht werden, dass ein ausreichendes Aufnahmevolumen 7 für zu verdampfendes Wasser 8 zur Verfügung gestellt wird, wobei die Behältereinrichtung möglichst schmal vorgesehen ist. So kann sie platzsparend neben dem Garraum 102 angeordnet werden. Dabei beträgt die Breite 5 des Behälterabschnitts 2 vorzugsweise zwischen 3 cm und 5 cm. In dem hier gezeigten Ausführungsbeispiel beträgt die Breite 5 gut 4 cm.

Um die Behältereinrichtung 1 gut ergreifen zu können, ist zwischen dem Halteabschnitt 3 und dem Behälterabschnitt 2 ein Eingriff 18 vorgesehen, durch welchen ein Benutzer seine Hand hindurch stecken kann. Dadurch wird es möglich, dass ein Benutzer den Griff 25 des Halteabschnitts 3 sicher umfassen kann. So kann der Benutzer trotz der speziellen Dimensionierung der Behältereinrichtung 1 die Behältereinrichtung 1 sicher und dennoch komfortabel aus dem Gargerät 100 entnehmen und z. B. zu einem Waschbecken transportieren.

Die hier gezeigte Ausführungsform der Behältereinrichtung 1 weist eine Längsausdehnung 4 von Behälterabschnitt 2 und Halteabschnitt 3 von 31,1 cm auf. Dabei entfallen davon auf die Längserstreckung 9 des Behälterabschnitts 25,6 cm. Die Behältereinrichtung 1 weist zudem eine Höhe von 21,2 cm auf. Die Breite 5 des Behälterschnitts 2 entspricht der Breite 17 des Halteabschnitts 3, wobei eine Breite von 4,4 cm gewählt ist. In anderen Ausgestaltungen können zweckmäßig auch andere Ausmaße vorgesehen sein, wie sie unter anderem in den Ansprüchen definiert sind.

Bevorzugt ist jedoch allgemein, dass die Behältereinrichtung 1 um ein Vielfaches höher und um ein Vielfaches tiefer ausgebildet ist, als die Behältereinrichtung 1 breit ausgestaltet ist. Unter einem Vielfachen ist dabei insbesondere zu verstehen, dass die Behältereinrichtung 1 mindestens dreimal, viermal, fünfmal oder noch höher und/oder tiefer als breit ausgebildet ist.

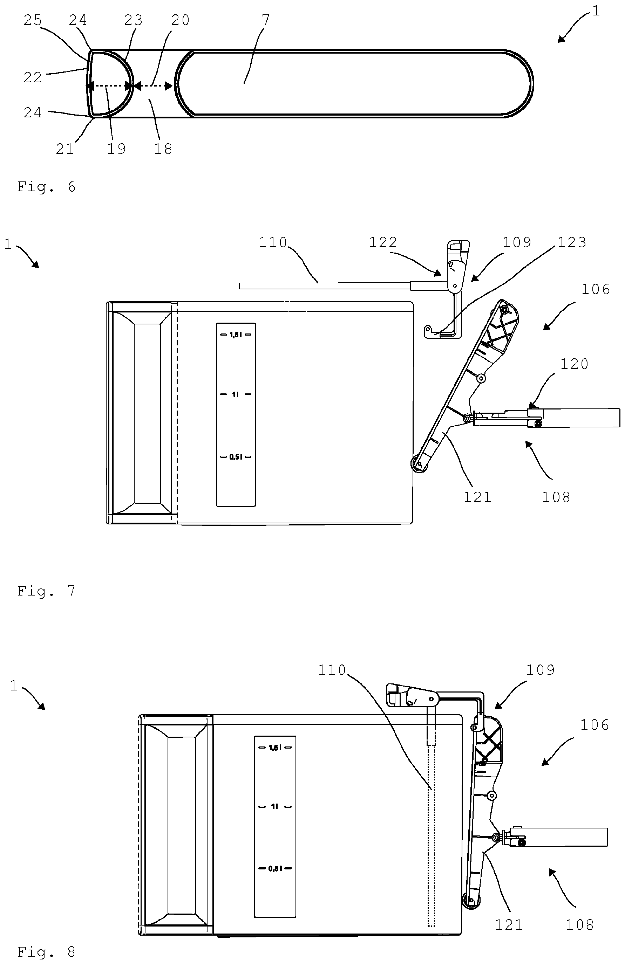

An dem Halteabschnitt 3 bzw. an der Front 26 des Halteabschnitts 3 ist eine Markierung 15 vorgesehen, welche einem Benutzer einen geeigneten Kraftpunkt zum Entnehmen der Behältereinrichtung 1 anzeigt. Wie in den Figuren 7 und 8 noch erläutert wird, wird ein Benutzer bei der Entnahme der Behältereinrichtung 1 aus der Aufnahmeeinrichtung 106 durch einen push-to-open-Mechanismus 108 unterstützt.

Die Behältereinrichtung 1 umfasst zudem in dem hier gezeigten Ausführungsbeispiel eine Abdeckeinrichtung 10. Diese Abdeckeinrichtung 10 ist als Deckel 27 ausgebildet, der in dieser Ausführung wenigstens eine Öffnung 11 aufweist.

Eine rein schematische Schnittansicht durch eine Behältereinrichtung 1 ist in Figur 4 näher darstellstellt. Hier ist zu erkennen, dass die Abdeckeinrichtung 10 derart ausgebildet, dass sie auf den Behälterabschnitt 2 aufgesetzt werden kann. Dabei umgreift die Abdeckeinrichtung 10 wenigstens abschnittsweise die beiden Wandungen 13 und 14 der Behältereinrichtung 1.

Dadurch wird eine zusätzliche Stabilisierung des Behälterabschnitts 2 ermöglicht, da die Abdeckeinrichtung 10 die beiden Wandungen 13 und 14 in einer bestimmten Position zueinander fixiert. So wird es insbesondere auch möglich, dass die Wandstärken der Wandungen 13, 14 sehr gering ausgeführt werden können, ohne dass es zu einer Instabilität der Behältereinrichtung 1 kommt.

Die Öffnung 11 in der Abdeckung 10 dient insbesondere zum Befüllen des Behälterabschnitts 2 mit Wasser 8. Dabei kann z. B. Wasser 8 aus einem Wasserhahn über diese Öffnung 11 in den Behälterabschnitt 2 eingefüllt werden. Zudem kann durch diese Öffnung 11 eine Rohreinrichtung 110 in den Behälterabschnitt 2 eingeschwenkt werden. Durch diese Rohreinrichtung 110 kann Wasser 8 aus dem Aufnahmeabschnitt 2 entnommen werden, um das Wasser der Dampferzeugereinrichtung 103 zur Verdampfung zuzuführen. Dazu ist die Öffnung 11 in der Abdeckeinrichtung 10 insbesondere länglich ausgebildet und wird hier durch einen Schlitz 28 zur Verfügung gestellt.

Damit beim Transport der befüllten Behältereinrichtung 1 von einer Wasserquelle zum Gargerät 100 kein Wasser 8 verschüttet werden kann, ist dem Behälterabschnitt 2 eine Schutzvorrichtung 12 zugeordnet. Dabei ist die Schutzvorrichtung 12 in dem hier gezeigten Ausführungsbeispiel an der Abdeckeinrichtung 10 vorgesehen. Dabei ist die Abdeckeinrichtung 10 derart geformt, dass die Schutzeinrichtung 12 eine Art Kragen 29 bildet, der sich wenigstens abschnittsweise nach innen in den Behälterabschnitt 2 erstreckt. Durch diesen Kragen 29 wird effektiv verhindert, dass Wasser 8 beim Transport der Behältereinrichtung 1 aus der Öffnung 11 herausschwappen kann.

In anderen vorteilhaften Ausgestaltungen kann die Schutzeinrichtung 12 auch an dem Behälterabschnitt 2 vorgesehen und insbesondere an diesem ausgebildet sein.

Damit ein Benutzer die Behältereinrichtung 1 sicher und komfortabel ergreifen kann, ist zudem eine spezielle Dimensionierung des Halteabschnitts 3 bzw. des Griffs 25 vorgesehen. Die spezielle Dimensionierung wird anhand der nachfolgenden Figuren 5 und 6 näher erläutert.

Dabei liegt die Breite 17 des Griffs 25 zwischen 30 und 50 mm, wobei die Tiefe 19 des Griffs 25 wenigstens abschnittsweise zwischen 60% bis 75% der Breite 17 eines Griffs 25 ausmacht. Bei einer solchen Dimensionierung des Griffs 25 ist das Verhältnis zwischen Breite 17 und Tiefe 19 des Griffs 25 derart vorteilhaft gewählt, dass ein Benutzer die Behältereinrichtung 1 trotz der großen Höhe und Tiefe der Behältereinrichtung 1 sicher, zuverlässig und zudem auch komfortabel halten kann.

Damit ein Benutzer den Griff 25 auch gut erreichen und umgreifen kann, muss der Eingriff 18 zwischen Behälterabschnitt 2 und Halteabschnitt 3 eine entsprechende Größe aufweisen. Dabei ist der Eingriff 18 vorteilhaft derart ausgestaltet, dass die Tiefe des Eingriffs 20 wenigstens im Bereich des Griffs 25 wenigstens 20 mm beträgt. In dem hier gezeigten Ausführungsbeispiel ist die Tiefe des Eingriffs 20 auf 27 mm eingestellt worden, sodass ein Benutzer auch mit größeren Händen ohne Probleme durch den Eingriff 18 greifen und den Griff 25 umgreifen kann.

In Figur 6 ist eine geschnittene Draufsicht der Behältereinrichtung 1 rein schematisch dargestellt. In dieser Ansicht ist zu erkennen, dass der Halteabschnitt 3 bzw. der Griff 25 einen rundlichen Querschnitt 21 aufweist. Dies wird in dem gezeigten Ausführungsbeispiel dadurch erreicht, dass der Griff 25 an der Vorderseite 22 und an der Rückseite 23 im Wesentlichen gebogen ausgebildet ist.

Durch die Überwölbungen an der Vorderseite 22 und an der Rückseite 23 wird ein besonders komfortables Umgreifen des Griffes 25 ermöglicht. Damit ein Benutzer den Griff 25 besonders komfortabel umgreifen kann, sind die Kanten des Griffs 25 derart ausgestaltet, dass sich die Vorderseite 22 und die Rückseite 23 jeweils über wenigstens einen Radius 24 aneinander anschließen. Dadurch wird vermieden, dass der Griff 25 Kanten aufweist, die in die Hand eines Benutzers einschneiden könnten.

Durch die allgemeine rundliche Ausgestaltung des Griffs 5 und insbesondere auch durch die Radien 24 zwischen der Vorderseite 22 und der Rückseite 23 wird ein besonders ergonomisch geformter Griff 25 zur Verfügung gestellt.

In den Figuren 7 und 8 ist rein schematisch dargestellt, dass der Aufnahmeeinrichtung 106 des Gargerätes 100 ein push-to-open-Mechanismus 108 zugeordnet ist. Die Figuren zeigen rein schematisch eine Seitenansicht der Behältereinrichtung 1 in der Aufnahmeeinrichtung 106.

Dabei ist der push-to-open-Mechanismus 108 in dem hier gezeigten Ausführungsbeispiel in der Aufnahmeeinrichtung 106 ausgebildet und unterstützt den Benutzer bei der Entnahme der Behältereinrichtung 1 aus dem Gargerät 100. In anderen Ausgestaltungen kann der push-to-open-Mechanismus 108 aber auch an der Behältereinrichtung 1 vorgesehen werden.

In den Figuren 7 und 8 ist rein schematisch dargestellt, dass eine Federeinrichtung 120 des push-to-open-Mechanismus 108 beim Einschieben der Behältereinrichtung 1 in die Aufnahmeeinrichtung 106 vorgespannt wird und in dieser Vorspannung gehalten wird. In dieser Situation ist die Behältereinrichtung 1 im Wesentlichen vollständig in die Aufnahmeeinrichtung 106 eingeschoben und bildet zusammen mit der Frontfläche 107 der Gehäuseeinrichtung 101 eine bündige Fläche.

Um die Behältereinrichtung 1 wieder aus der Aufnahmeeinrichtung 106 zu entnehmen, wird die Behältereinrichtung 101 ein kleines Stück in die Aufnahmeeinrichtung hinein geschoben, wodurch der push-to-open-Mechanismus 108 ausgelöst wird und die gespeicherte Federkraft ein Verlagerungselement 121 nach vorne schiebt. Dieses Verlagerungselement 121 drückt die Behältereinrichtung 1 dann soweit aus der Aufnahmeeinrichtung 106 heraus, dass ein Benutzer durch den Eingriff 18 zwischen Behälterabschnitt 2 und Halteabschnitt 3 hindurch greifen und den Griff 25 fassen kann. Ein geeigneter Kraftpunkt zum Auslösen des push-to-open-Mechanismus wird dem Benutzer durch eine Markierung 15 an der Front 26 des Halteabschnitts 3 angezeigt.

Zudem ist in den Figuren 7 und 8 zu erkennen, dass der Aufnahmeeinrichtung 106 eine Entnahmeeinrichtung 109 zugeordnet ist, über welche Wasser 8 aus dem Aufnahmeabschnitt 2 entnommen und der Dampferzeugereinrichtung 103 zugeführt werden kann.

Dabei umfasst die Entnahmeeinrichtung 109 eine Rohreinrichtung 110, welche bei nicht eingeschobener Behältereinrichtung 1 durch eine hier nicht näher dargestellte Federeinrichtung 122 in einer ungefähr horizontalen Position gehalten wird. Wird die Behältereinrichtung 1 in die Aufnahmeeinrichtung 106 eingeschoben, tritt sie in Kontakt mit dem Verlagerungselement 121 des push-to-open-Mechanismus 108 und drückt dieses Verlagerungselement 121 zurück. Dadurch wird die Federeinrichtung 120 des push-to-open-Mechanismus 108 gespannt.

Zugleich wird automatisch die Rohreinrichtung 110 durch die Öffnung 11 in der Abdeckeinrichtung 10 der Behältereinrichtung 1 in den Behälterabschnitt 2 eingetaucht. Dies erfolgt dadurch, dass die Behältereinrichtung 1 gegen einen Schenkel 123 der Entnahmeeinrichtung 109 drückt und diese damit gegen die Federkraft der Federeinrichtung 122 in den Behälterabschnitt 2 eintauchen lässt.

Wird der push-to-open-Mechanismus 108 wieder entriegelt, wird die Behältereinrichtung 1 aus der Aufnahmeeinrichtung 106 durch die Federkraft der Federeinrichtung 120 heraus geschoben. Dadurch wird gleichzeitig die Rohreinrichtung 110 automatisch durch die Federeinrichtung 122 der Entnahmeeinrichtung 109 wieder nach oben weggeschwenkt, sodass die Behältereinrichtung 1 ohne Probleme aus dem Gargerät 100 entnommen werden kann.

### Bezugszeichenliste

- 1: Behältereinrichtung
- 2: Behälterabschnitt
- 3: Halteabschnitt
- 4: Längsausdehnung
- 5: Breite Behälterabschnitt
- 6: Höhe Behälterabschnitt
- 7: Aufnahmevolumen
- 8: Wasser
- 9: Längserstreckung
- 10: Abdeckeinrichtung
- 11: Öffnung
- 12: Schutzvorrichtung
- 13: Wandung
- 14: Wandung
- 15: Markierung
- 16: Höhe Halteabschnitt
- 17: Breite Griff
- 18: Eingriff
- 19: Tiefe Griff
- 20: Tiefe Eingriff
- 21: Querschnitt
- 22: Vorderseite
- 23: Rückseite
- 24: Radius
- 25: Griff
- 26: Front
- 27: Deckel
- 28: Schlitz
- 29: Kragen
- 100: Gargerät
- 101: Gehäuseeinrichtung
- 102: Garraum
- 103: Dampferzeugereinrichtung
- 104: Dampf
- 105: Wasservorrateinrichtung
- 106: Aufnahmeeinrichtung
- 107: Frontfläche
- 108: push-to-open-Mechanismus
- 109: Entnahmeeinrichtung
- 110: Rohreinrichtung
- 111: Garraumtür
- 112: Kombigargerät
- 113: Mikrowelleneinrichtung
- 114: Hochfrequenzerzeuger
- 115: Hochfrequenzstrahlung
- 116: Eintrittsstelle
- 117: Beschickungsöffnung
- 118: Dampfeinlass
- 119: Dampfauslass
- 120: Federeinrichtung
- 121: Verlagerungselement
- 122: Federeinrichtung
- 123: Schenkel

## Patentansprüche

1. Gargerät (100) mit wenigstens einer Gehäuseeinrichtung (101), wenigstens einem Garraum (102), wenigstens einer Dampferzeugereinrichtung (103) umfassend wenigstens eine entnehmbare Behältereinrichtung (1), wobei die Dampferzeugereinrichtung (103) dazu geeignet und ausgebildet ist, den Garraum (102) mit Dampf (104) zu versorgen und wobei die Dampferzeugereinrichtung (103) wenigstens eine Entnahmeeinrichtung (109) umfasst und der Dampferzeugereinrichtung (103) die wenigstens eine entnehmbare Behältereinrichtung (1) zugeordnet ist, welche wenigstens einen Behälterabschnitt (2) und wenigstens einen Halteabschnitt (3) umfasst, wobei zwischen dem Behälterabschnitt (2) und dem Halteabschnitt (3) wenigstens abschnittsweise wenigstens ein Eingriff (18) ausgebildet ist und wobei der Halteabschnitt (3) wenigstens einen Griff (25) umfasst, wobei die Behältereinrichtung (1) eine Abdeckeinrichtung (10) umfasst und in eine entsprechende Aufnahmeeinrichtung (106) neben dem Garraum (102) einschiebbar ist,
**dadurch gekennzeichnet, dass**
der Behälterabschnitt (2) und der Halteabschnitt (3) zusammen eine Längsausdehnung (4) aufweisen, die ein Vielfaches der Breite (17) des Halteabschnitts (3) beträgt und dass wenigstens der Halteabschnitt (3) eine Höhe (16) aufweist, die ein Vielfaches der Breite (17) des Griffs (25) beträgt und dass die Breite (17) des Griffs (25) zwischen 30 mm bis 50 mm beträgt und die Tiefe (19) des Griffs (25) wenigstens abschnittweise 60% bis 75% der Breite (17) des Griffs (25) ausmacht, und die Entnahmeeinrichtung (109) wenigstens eine schwenkbare Rohreinrichtung (110) umfasst, welche beim Einschieben der Behältereinrichtung (1) in die Aufnahmeeinrichtung (106) wenigstens abschnittsweise in den Behälterabschnitt (2) eintaucht,
wobei der Rohreinrichtung (110) wenigstens eine Federeinrichtung (122) zugeordnet ist, mittels der die Rohreinrichtung (110) beim Entnehmen der Behältereinrichtung (1) aus der Aufnahmeeinrichtung (106) automatisch wieder wegschwenkt ist,
wobei die Rohreinrichtung (110) bei einer entnommenen Behältereinrichtung (1) im Wesentlichen horizontal im oberen Bereich der Aufnahmeeinrichtung (106) gelagert ist, wobei die Rohreinrichtung (110) beim Einschieben der Behältereinrichtung (1) in die Aufnahmeeinrichtung (106) automatisch in die Behältereinrichtung (1) eingetaucht und in eine ungefähr vertikale Position verlagert ist,
wobei die Rohreinrichtung (110) durch die Abdeckeinrichtung (10) der Behältereinrichtung (1) oder durch eine Öffnung (11) in der Abdeckeinrichtung (10) der Behältereinrichtung (1) hindurch geführt ist, wobei die Öffnung (11) in der Abdeckeinrichtung (10) länglich ausgebildet ist.

2. Gargerät (100) nach dem vorhergehenden Anspruch, **dadurch gekennzeichnet, dass** die Breite (17) des Griffs (25) zwischen 40 mm und 45 mm beträgt und/oder die Tiefe (19) des Griffs (25) 65% bis 70% der Breite (17) des Griffs (25) ausmacht.

3. Gargerät (100) nach einem der vorhergehenden Ansprüche, **dadurch gekennzeichnet, dass** der Eingriff (18) zwischen dem Behälterabschnitt (2) und dem Halteabschnitt (3) als ein Durchgriff ausgebildet ist.

4. Gargerät (100) nach einem der vorhergehenden Ansprüche, **dadurch gekennzeichnet, dass** der Griff (25) an der Vorderseite (22) wenigstens abschnittsweise im Wesentlichen gebogen ausgebildet ist.

5. Gargerät (100) nach einem der vorhergehenden Ansprüche, **dadurch gekennzeichnet, dass** der Griff (25) an der Rückseite (23) wenigstens abschnittsweise im Wesentlichen gebogen ausgestaltet ist.

6. Gargerät (100) nach einem der vorhergehenden Ansprüche, **dadurch gekennzeichnet, dass** sich die Vorderseite (22) des Griffs (25) über wenigstens einen Radius (24) an die Rückseite (23) anschließt.

7. Gargerät (100) nach einem der vorhergehenden Ansprüche, **dadurch gekennzeichnet, dass** die Behältereinrichtung (1) im installierten Zustand im Wesentlichen bündig mit wenigstens einer Frontfläche (107) der Gehäuseeinrichtung (101) abschließt.

8. Gargerät (100) nach einem der vorhergehenden Ansprüche, **dadurch gekennzeichnet, dass** der Aufnahmeeinrichtung (106) wenigstens ein push-to-open-Mechanismus (108) zugeordnet ist.

9. Gargerät (100) nach einem der vorhergehenden Ansprüche, **dadurch gekennzeichnet, dass** an dem Halteabschnitt (3) oder an der Front (26) des Halteabschnitts (3) ist eine Markierung (15) vorgesehen ist, mittels der einem Benutzer einen geeigneten Kraftpunkt zum Entnehmen der Behältereinrichtung (1) anzeigt ist.

10. Gargerät (100) nach einem der vorhergehenden Ansprüche, **dadurch gekennzeichnet, dass** die Abdeckeinrichtung (10) als Deckel (27) ausgebildet ist, welcher die Öffnung (11) aufweist.

11. Gargerät (100) nach einem der vorhergehenden Ansprüche, **dadurch gekennzeichnet, dass** die Entnahmeeinrichtung (109) einen Schenkel (123) umfasst, gegen den die in die Aufnahmeeinrichtung (106) eingeschobene Behältereinrichtung (1) drückt und die Rohreinrichtung (110) der Entnahmeeinrichtung (109) damit gegen die Federkraft der Federeinrichtung (122) in den Behälterabschnitt (2) eingetaucht ist.

12. Gargerät (100) nach einem der vorhergehenden Ansprüche, **dadurch gekennzeichnet, dass** die Öffnung (11) in der Abdeckeinrichtung (10) als ein Schlitz (28) ausgebildet ist.

13. Gargerät (100) nach einem der vorhergehenden Ansprüche, **dadurch gekennzeichnet, dass** die Behältereinrichtung (1) eine Schutzvorrichtung (12) aufweist, welche an der Abdeckeinrichtung (10) und/oder an dem Behälterabschnitt (2) vorgesehen ist.

14. Gargerät (100) nach einem der vorhergehenden Ansprüche, **dadurch gekennzeichnet, dass** die Schutzeinrichtung (12) eine Art Kragen (29) bildet, der sich wenigstens abschnittsweise nach innen in den Behälterabschnitt (2) erstreckt.

## Claims

1. Cooking appliance (100) comprising at least one housing means (101), at least one cooking chamber (102), and at least one steam generation means (103) that comprises at least one removable container means (1), the steam generation means (103) being suitable and designed to supply the cooking chamber (102) with steam (104) and the steam generation means (103) comprising at least one removal means (109) and the steam generation means (103) being associated with the at least one removable container means (1) which comprises at least one container portion (2) and at least one holding portion (3), at least one engagement (18) being formed at least in portions between the container portion (2) and the holding portion (3) and the holding portion (3) comprising at least one handle (25), the container means (1) comprising a covering means (10) and being insertable into a corresponding receiving means (106) next to the cooking chamber (102), **characterised in that** the container portion (2) and the holding portion (3) together have a longitudinal extent (4) which is a multiple of the width (17) of the holding portion (3) and **in that** at least the holding portion (3) has a height (16) which is a multiple of the width (17) of the handle (25) and **in that** the width (17) of the handle (25) is between 30 mm and 50 mm and the depth (19) of the handle (25) makes up 60% to 75% of the width (17) of the handle (25) at least in portions, and the removal means (109) comprises at least one pivotable tube means (110) which is immersed at least in portions in the container portion (2) when the container means (1) is inserted into the receiving means (106), the tube means (110) being associated with at least one spring means (122) by means of which the tube means (110) is automatically pivoted away again when the container means (1) is removed from the receiving means (106), the tube means (110) being mounted substantially horizontally in the upper region of the receiving means (106) when the container means (1) is removed, the tube means (110) being automatically immersed in the container means (1) and displaced into an approximately vertical position when the container means (1) is inserted into the receiving means (106), the tube means (110) being guided through the covering means (10) of the container means (1) or through an opening (11) in the covering means (10) of the container means (1), the opening (11) in the covering means (10) being elongate.

2. Cooking appliance (100) according to the preceding claim, **characterised in that** the width (17) of the handle (25) is between 40 mm and 45 mm and/or the depth (19) of the handle (25) makes up 65% to 70% of the width (17) of the handle (25).

3. Cooking appliance (100) according to either of the preceding claims, **characterised in that** the engagement (18) between the container portion (2) and the holding portion (3) is designed as a through-passage.

4. Cooking appliance (100) according to any of the preceding claims, **characterised in that** the handle (25) is substantially curved, at least in portions, on the front side (22).

5. Cooking appliance (100) according to any of the preceding claims, **characterised in that** the handle (25) is substantially curved, at least in portions, on the rear side (23).

6. Cooking appliance (100) according to any of the preceding claims, **characterised in that** the front side (22) of the handle (25) adjoins the rear side (23) by way of at least one radius (24).

7. Cooking appliance (100) according to any of the preceding claims, **characterised in that** the container means (1), in the installed state, ends substantially flush with at least one front face (107) of the housing means (101).

8. Cooking appliance (100) according to any of the preceding claims, **characterised in that** at least one push-to-open mechanism (108) is associated with the receiving means (106).

9. Cooking appliance (100) according to any of the preceding claims, **characterised in that** a mark (15) is provided on the holding portion (3) or on the front (26) of the holding portion (3), by means of which mark a suitable force point for removing the container means (1) is indicated to a user.

10. Cooking appliance (100) according to any of the preceding claims, **characterised in that** the covering means (10) is designed as a cover (27) which has the opening (11).

11. Cooking appliance (100) according to any of the preceding claims, **characterised in that** the removal means (109) comprises a leg (123) against which the container means (1) inserted into the receiving means (106) presses and the tube means (110) of the removal means (109) is thus immersed in the container portion (2) against the spring force of the spring means (122).

12. Cooking appliance (100) according to any of the preceding claims, **characterised in that** the opening (11) in the covering means (10) is formed as slot (28).

13. Cooking appliance (100) according to any of the preceding claims, **characterised in that** the container means (1) has a protective device (12) which is provided on the covering means (10) and/or on the container portion (2).

14. Cooking appliance (100) according to any of the preceding claims, **characterised in that** the protective means (12) forms a kind of collar (29) which extends inwardly into the container portion (2) at least in portions.

## Revendications

1. Appareil de cuisson (100) comportant au moins un dispositif formant boîtier (101), au moins une enceinte de cuisson (102), au moins un dispositif générateur de vapeur (103) comprenant au moins un dispositif formant récipient amovible (1), le dispositif générateur de vapeur (103) étant adapté et conçu pour alimenter l'enceinte de cuisson (102) en vapeur (104) et le dispositif générateur de vapeur (103) comprenant au moins un dispositif de retrait (109) et le dispositif générateur de vapeur (103) étant associé à l'au moins un dispositif formant récipient amovible (1), lequel comprend au moins une partie récipient (2) et au moins une partie de maintien (3),
au moins une partie d'engagement (18) étant formée au moins partiellement entre la partie récipient (2) et la partie de maintien (3) et la partie de maintien (3) comprenant au moins une poignée (25), le dispositif formant récipient (1) comprenant un dispositif de recouvrement (10) et étant insérable dans un dispositif de réception correspondant (106) à côté de l'enceinte de cuisson (102),
**caractérisé en ce que** la partie récipient (2) et la partie de maintien (3) ont ensemble une étendue longitudinale (4) qui est un multiple de la largeur (17) de la partie de maintien (3), **en ce qu'**au moins la partie de maintien (3) a une hauteur (16) qui est un multiple de la largeur (17) de la poignée (25), et **en ce que** la largeur (17) de la poignée (25) est comprise entre 30 et 50 mm, et la profondeur (19) de la poignée (25) représente au moins partiellement 60 à 75 % de la largeur (17) de la poignée (25), et le dispositif de retrait (109) comprend au moins un dispositif pivotant formant tube (110) qui rentre au moins partiellement dans la partie récipient (2) lors de l'insertion du dispositif formant récipient (1) dans le dispositif de réception (106),
le dispositif formant tube (110) étant associé à au moins un dispositif de ressort (122), au moyen duquel le dispositif formant tube (110) est automatiquement dégagé lors du retrait du dispositif formant récipient (1) du dispositif de réception (106),
le dispositif formant tube (110) étant disposé sensiblement horizontalement dans la région supérieure du dispositif de réception (106) lorsque le dispositif formant récipient (1) est retiré,
le dispositif formant tube (110) rentrant automatiquement dans le dispositif formant récipient (1) lors de l'insertion du dispositif formant récipient (1) dans le dispositif de réception (106) et étant déplacé dans une position approximativement verticale,
le dispositif formant tube (110) traversant le dispositif de recouvrement (10) du dispositif formant récipient (1) ou une ouverture (11) dans le dispositif de recouvrement (10) du dispositif formant récipient (1), l'ouverture (11) dans le dispositif de recouvrement (10) étant allongée.

2. Appareil de cuisson (100) selon la revendication précédente, **caractérisé en ce que** la largeur (17) de la poignée (25) est comprise entre 40 et 45 mm et/ou la profondeur (19) de la poignée (25) représente 65 à 70 % de la largeur (17) de la poignée (25).

3. Appareil de cuisson (100) selon l'une des revendications précédentes, **caractérisé en ce que** la partie d'engagement (18) entre la partie récipient (2) et la partie de maintien (3) est réalisée sous la forme d'un passage.

4. Appareil de cuisson (100) selon l'une des revendications précédentes, **caractérisé en ce que** la poignée (25) située sur la face avant (22) est au moins partiellement sensiblement recourbée.

5. Appareil de cuisson (100) selon l'une des revendications précédentes, **caractérisé en ce que** la poignée (25) située sur la face arrière (23) est au moins partiellement sensiblement recourbée.

6. Appareil de cuisson (100) selon l'une des revendications précédentes, **caractérisé en ce que** la face avant (22) de la poignée (25) est reliée par au moins un rayon (24) à la face arrière (23).

7. Appareil de cuisson (100) selon l'une des revendications précédentes, **caractérisé en ce que** le dispositif formant récipient (1) à l'état installé est sensiblement en affleurement avec au moins une surface frontale (107) du dispositif formant boîtier (101).

8. Appareil de cuisson (100) selon l'une des revendications précédentes, **caractérisé en ce qu'**au moins un mécanisme d'ouverture par poussée (108) est associé au dispositif de réception (106).

9. Appareil de cuisson (100) selon l'une des revendications précédentes, **caractérisé en ce qu'**une marque (15) est prévue sur la partie de maintien (3) ou sur l'avant (26) de la partie de maintien (3), marque au moyen de laquelle un point de force permettant de retirer le dispositif formant récipient (1) est affiché à l'utilisateur.

10. Appareil de cuisson (100) selon l'une des revendications précédentes, **caractérisé en ce que** le dispositif de recouvrement (10) se présente sous forme de couvercle (27), lequel comporte l'ouverture (11).

11. Appareil de cuisson (100) selon l'une des revendications précédentes, **caractérisé en ce que** le dispositif de retrait (109) comprend une patte (123), contre laquelle le dispositif formant récipient (1) inséré dans le dispositif de réception (106) s'appuie, et le dispositif formant tube (110) du dispositif de retrait (109) rentre ainsi dans la partie récipient (2) en s'opposant à la force de ressort exercée par le dispositif de ressort (122).

12. Appareil de cuisson (100) selon l'une des revendications précédentes, **caractérisé en ce que** l'ouverture (11) dans le dispositif de recouvrement (10) se présente sous forme de fente (28).

13. Appareil de cuisson (100) selon l'une des revendications précédentes, **caractérisé en ce que** le dispositif formant récipient (1) comporte un dispositif de protection (12) qui est prévu sur le dispositif de recouvrement (10) et/ou sur la partie récipient (2).

14. Appareil de cuisson (100) selon l'une des revendications précédentes, **caractérisé en ce que** le dispositif de protection (12) forme une sorte de collerette (29) qui s'étend au moins partiellement vers l'intérieur de la partie récipient (2).
